# EUROPÄISCHE PATENTSCHRIFT

(11) **EP 0 937 187 B1**
(45) Veröffentlichungstag und Bekanntmachung des Hinweises auf die Patenterteilung: **26.09.2001**
(21) Anmeldenummer: 97948696.6
(22) Anmeldetag: 30.10.1997
(51) Int. Cl.: E05B 47/00

(54) **KRAFTFAHRZEUG-HECKTÜRSCHLOSS ODER -HECKKLAPPENSCHLOSS AN EINER HECKTÜR ODER HECKKLAPPE MIT HECKSCHEIBEN-WISCHERVORRICHTUNG**
LOCK FOR A VEHICLE REAR DOOR OR A REAR HATCH PROVIDED WITH A WINDOW WIPER
SERRURE DE PORTIERE ARRIERE D'AUTOMOBILE OU DE HAYON A ESSUIE-GLACE

(30) Priorität: 06.11.1996 DE 19645611
(43) Veröffentlichungstag der Anmeldung: 25.08.1999
(73) Patentinhaber: ROBERT BOSCH GMBH, 70442 Stuttgart (DE)
(72) Erfinder: WEYERSTALL, Bernd, D-42369 Wuppertal (DE); BUDDE, Ulrich, D-51702 Bergneustadt (DE)
(86) Internationale Anmeldenummer: DE9702531
(87) Internationale Veröffentlichungsnummer: WO9820219

(56) Entgegenhaltungen:
- WO-A-96/33891
- DE-A- 3 807 087
- US-A- 3 688 332
- US-A- 5 474 339

## Beschreibung

Die Erfindung betrifft ein Kraftfahrzeug-Hecktürschloß oder Heckklappenschloß zum Einsatz in einer Heckklappe mit Heckscheiben-Wischervorrichtung mit den Merkmalen des Oberbegriffs von Anspruch 1 bzw. des nebengeordneten Anspruchs 2. Der Begriff der Heckklappe wird der Einfachheit halber durchgehend verwendet und soll eine Heckklappe im engeren Sinne sowie eine Hecktür umfassen.

Bei Heckklappen von Kraftfahrzeugen sind mittlerweile Heckscheiben-Wi-schervorrichtungen mit elektrischem Wischermotor Standard. An einer solchen Heckklappe befindet sich natürlich auch ein Türschloß mit Schließele-menten, üblicherweise einer Gabelfalle und einer Sperrklinke. Bekannt ist es dabei bereits, eine erhöhte Integration dadurch zu erreichen, daß man den Wischermotor der Heckscheiben-Wischervorrichtung auch als Antriebsmotor der Schließeinrichtung nutzt und dazu über ein Getriebe mit der Sperrklinke bzw. einem Zwischenhebel der Schließmechanik betrieblich kuppelbar macht (WO 96/33891). Bei dieser bekannten Anordnung ist vorgesehen, daß der elektrische Antriebsmotor für jede einzelne Funktion in beiden Drehrichtungen betätigt wird - Wischerfunktion, Öffnerfunktion, Heckscheiben-Öffner-funktion. Dazu ist eine komplizierte Kraftübertragungs-Konstruktion mit einer Mehrzahl von ineinander greifenden Getriebeteilen notwendig. Der Lehre liegt also das Problem zugrunde, das gattungsgemäße Kraftfahrzeug-Hecktürschloß oder -Heckklappenschloß weiter zu vereinfachen und noch stärker zu integrieren.

Die zuvor aufgezeigte Problemstellung ist in einer ersten Variante mit den Merkmalen des kennzeichnenden Teils von Anspruch 1 gelöst, in einer zweiten, nebengeordneten Variante durch die Merkmale des kennzeichnenden Teils von Anspruch 2. Das erfindungsgemäße Kraftfahrzeug-Hecktürschloß oder -Heckklappenschloß nutzt für eine Funktion jeweils nur eine Drehrichtung (Anspruch 1) oder eine Drehrichtung und Drehgeschwindigkeit (Anspruch 2) des elektrischen Antriebsmotors. Das vereinfacht die Kraftübertragungs-Konstruktion gegenüber dem Stand der Technik erheblich. Dadurch läßt sich dann auch die Heckscheiben-Wischervorrichtung mit dem Heckklappenschloß ohne weiteres zu einem Modul integrieren. Damit ist es möglich, die Gesamtanordnung in einem Zug in der Heckklappe zu montieren. Das hat ganz erhebliche montagetechnische und damit wirtschaftliche Vorteile.

Aus dem Stand der Technik ist für sich eine Zweitnutzung für einen Wischermotor einer Heckscheiben-Wischervorrichtung bekannt (DE 38 07 087 A1). Hier ist vorgesehen, daß als Hilfsmotor einer Zuzieheinrichtung der Wischermotor einer vorhandenen Heckscheiben-Wischervorrichtung dient. Eine motorische Öffnungshilfe ist hier nicht vorgesehen und auch nicht integrierbar.

Vorteilhafte Ausgestaltungen der Erfindung sind Gegenstand der Unteransprüche. Im folgenden wird die Erfindung anhand einer lediglich Ausführungsbeispiele darstellenden Zeichnung näher erläutert. In der Zeichnung zeigt
- Fig. 1: ausschnittweise in einem Querschnitt eine Heckklappe eines Kraftfahrzeugs mit integrierter Heckscheiben-Wischervorrichtung, Schließzylinder mit Schlüssel, Türgriff und Heckklappenschloß,
- Fig. 2: einen integrierten Modul aus Heckscheiben-Wischervorrichtung und Heckklappenschloß mit motorischer Öffnungshilfe entsprechend Fig. 1,
- Fig. 3: eine zweite Ausführungsform der Lehre der Erfindung.

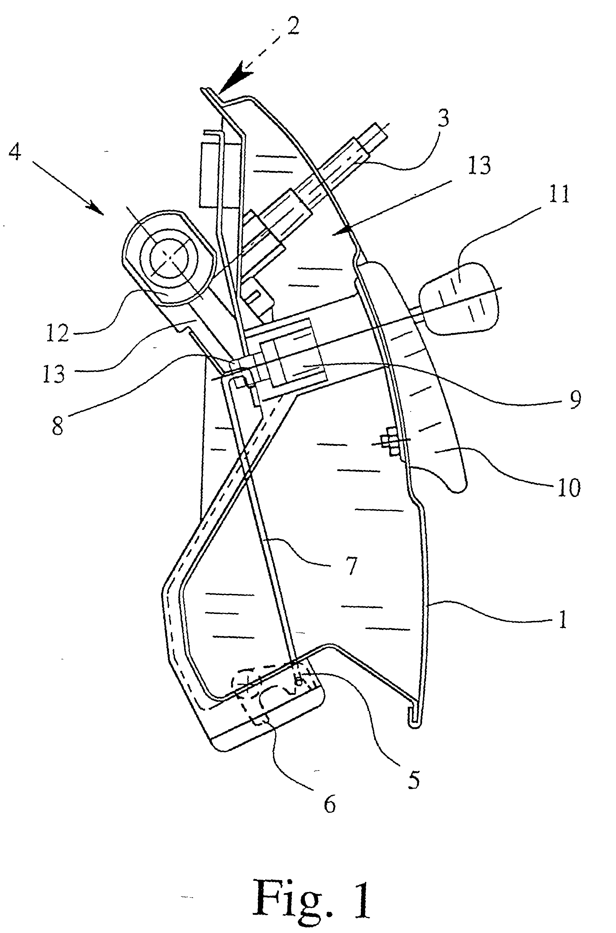

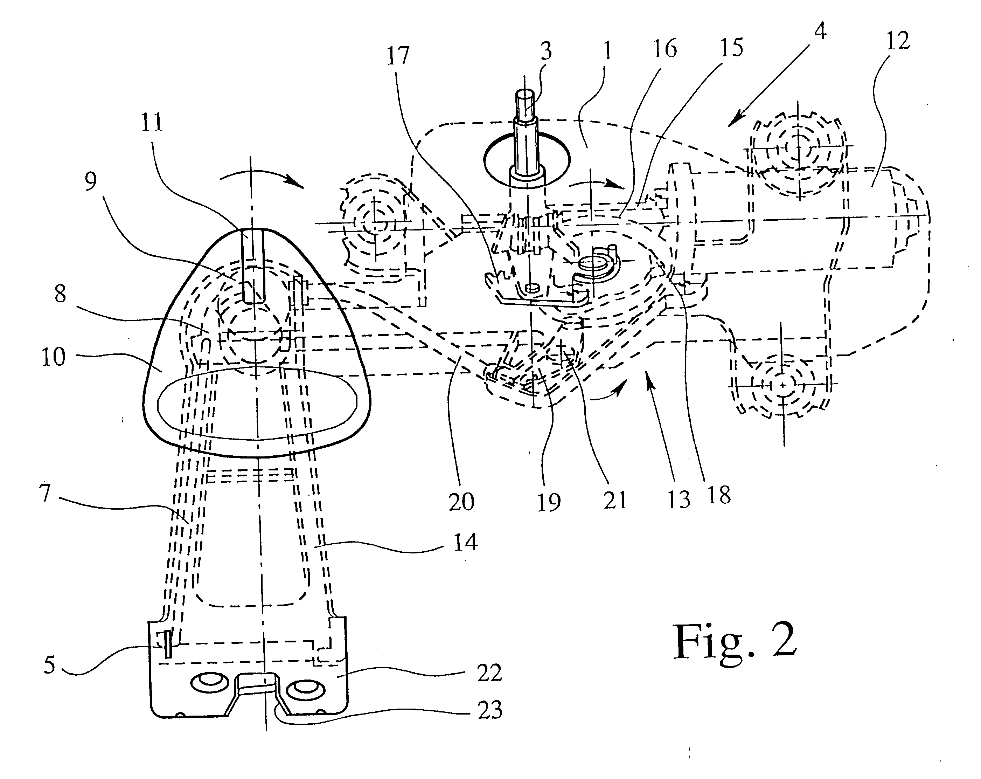

Fig. 1 und Fig. 2 sind im Zusammenhang zu sehen, um die Lehre der Erfindung zunächst richtig zu verstehen.

Dargestellt ist ein Kraftfahrzeug-Heckklappenschloß, wobei der Begriff Heckklappe auch eine Hecktür eines Kombikraftwagens beschreiben kann. Das dargestellte Ausführungsbeispiel zeigt die Heckklappe 1 eines Kompaktfahrzeuges, und zwar den unteren Bereich, an den sich nach oben in entsprechender Schräglage eine Heckscheibe 2, in Fig. 1 angedeutet, anschließt. In die Heckklappe 1 oder bei alternativen Ausführungsformen auch in die Heckscheibe 2 selbst ist regelmäßig eine Öffnung eingearbeitet, durch die ein Antriebszapfen 3 für einen hier nicht dargestellten Wischerarm einer Heckscheiben-Wischervorrichtung 4 hindurchragt.

Nicht dargestellt sind die üblichen Schließelemente des Kraftfahrzeug-Heckklappenschlosses wie eine Gabelfalle oder eine Sperrklinke. Hierzu darf auf den Stand der Technik verwiesen werden, beispielsweise die DE - A - 34 09 996 oder die eingangs zum Ausgangspunkt genannte Druckschrift.

Zum Öffnen der Heckklappe 1 wird die Sperrklinke des Kraftfahrzeug-Heckklappenschlosses ausgehoben, häufig über einen Zwischenhebel 5, so daß die Gabelfalle ausschwenken und den Schließkloben am Karosserierahmen freigeben kann. Fig. 1 zeigt insoweit den Zwischenhebel 5, der über einen Betätigungsarm 6 die hier nicht zu erkennende Sperrklinke des Kraftfahrzeug-Heckklappenschlosses aushebt und selbst von einer Betätigungsstange 7 betätigt wird, die an einer Kulisse 8 an einem Schließzylinder 9 des Heckklappenschlosses eingehängt ist. Man erkennt außen an der Heckklappe 1 einen Außengriff 10, in den die Einstecköffnung des Schließzylinders 9 integriert ist, man erkennt den dort eingesteckten Türschlüssel 11. Durch Drehen des Schließzylinders 9 mittels des Türschlüssels 11 läßt sich die Kulisse 8 drehen, die Betätigungsstange 7 ziehen und der Zwischenhebel 5 anheben, so daß über den Betätigungsarm 6 die Sperrklinke ausgehoben wird. Mittels des Außengriffes 10 kann man die Heckklappe 1 öffnen.

Zum Kraftfahrzeug-Heckklappenschloß, das hier dargestellt ist, gehört aber auch ein dem Zwecke einer Fernöffnung der Heckklappe 1 dienender elektrischer Antriebsmotor 12 mit nachgeschaltetem Getriebe 13, der ebenfalls zum Öffnen der Heckklappe 1 die Sperrklinke, hier wieder über den Zwischenhebel 5, aushebt.

Wesentlich für die Erfindung ist nun, daß der Wischermotor der Heckscheiben-Wischervorrichtung 4 als elektrischer Antriebsmotor 12 dient und dazu über das Getriebe 13 mit der Sperrklinke bzw. dem Zwischenhebel 5 betrieblich kuppelbar ist. Das hat die im allgemeinen Teil der Beschreibung beschriebenen Vorteile höheren Integrationsgrades, einfacheren Aufbaues und geringerer Kosten.

In Fig. 2 erkennt man links eine Befestigungskonsole 14 für den Schließzylinder 9 an der Heckklappe 1. Darin erkennt man wiederum links die Betätigungsstange 7, die unten am Zwischenhebel 5 und oben in der Kulisse 8 eingehängt ist. Man erkennt den Schließzylinder 9 und den Türschlüssel 11. Rechts in Fig. 2 erkennt man den elektrischen Antriebsmotor 12, der mit einem als Schneckenradgetriebe ausgeführten Getriebe 13 mit Schnecke 15 und Schneckenrad 16 gekuppelt ist. Eine Drehung des Schneckenrades 16 entgegen dem Uhrzeigersinn, wie durch den Pfeil unten angedeutet entspricht dem Wischerbetrieb über eine Zahnklinke 17 zum Antriebszapfen 3. Eine Drehung des Schneckenrades 16 im Uhrzeigersinn, wie durch den Pfeil oben angedeutet, erfüllt die Funktion Öffnungshilfe über einen federbelasteten Mitnehmer 18. Man erkennt dazu im dargestellten Ausführungsbeispiel einen mit dem Mitnehmer 18 in Wechselwirkung tretenden zweiarmigen Betätigungshebel 19, der über einen Bowdenzug 20 mit der Kulisse 8 gekuppelt ist. Bei Drehung des Schnekkenrades 16 im Uhrzeigersinn trifft die vorlaufende Kante des Mitnehmers 18 auf das äußere Ende des Betätigungshebels 19 und schwenkt diesen entgegen dem Uhrzeigersinn in Fig. 2 um die Schwenkachse 21. Dadurch wird der Bowdenzug 20 gezogen, die Kulisse 8 in Fig. 2 im Uhrzeigersinn gedreht und über die Betätigungsstange 7 der Zwischenhebel 5 angehoben, die Sperrklinke also ausgehoben.

Dreht sich das Schneckenrad 16 in Gegenrichtung, also entgegen dem Uhrzeigersinn, so läuft der federbelastete Mitnehmer 18 schnappend am vorderen Ende des Betätigungshebels 19 vorbei, ohne diesen weiter zu bewegen.

Für das dargestellte Ausführungsbeispiel ist ferner wesentlich, daß die Heckscheiben-Wischervorrichtung 4 mit dem Heckklappenschloß zu einem Modul integriert ist. Man erkennt dies in Fig. 2 sehr deutlich, man erkennt nämlich die Befestigungspunkte für die Gesamtanordnung. Im übrigen ist hier in besonderer Ausführung in der Befestigungskonsole 14 das Kraftfahrzeug-Türschloß 22 selbst integriert, erkennbar mit dem Einlaufschlitz 23 für den Schließkloben.

Fig. 2 zeigt weiter, daß die Sperrklinke bzw. der Zwischenhebel 5 über ein Gestänge-Betätigungsstange 7 - und/oder über einen Bowdenzug - Bowdenzug 20 - mit dem Getriebe 13 verbunden ist. Das eigentliche Kraftfahrzeug-Türschloß 22 mit der Sperrklinke befindet sich also räumlich entfernt von dem Antriebsmotor 12. Es kann sich in Alternativausführungen natürlich auch unmittelbar an dem elektrischen Antriebsmotor 12 befinden, das hängt von der Gesamt-Bauform der Heckklappe 1 ab.

Wie zuvor schon erläutert worden ist gilt für das dargestellte Ausführungsbeispiel, daß der elektrische Antriebsmotor 12 in beiden Drehrichtungen ansteuerbar ist und das Getriebe 13 in der einen Drehrichtung den Kraftübertragungszug zur Wischervorrichtung 4 und in der anderen Drehrichtung den Kraftübertragungszug zur Sperrklinke bzw. zum Zwischenhebel 5 schließt. Das ist weiter oben ausführlich erläutert worden.

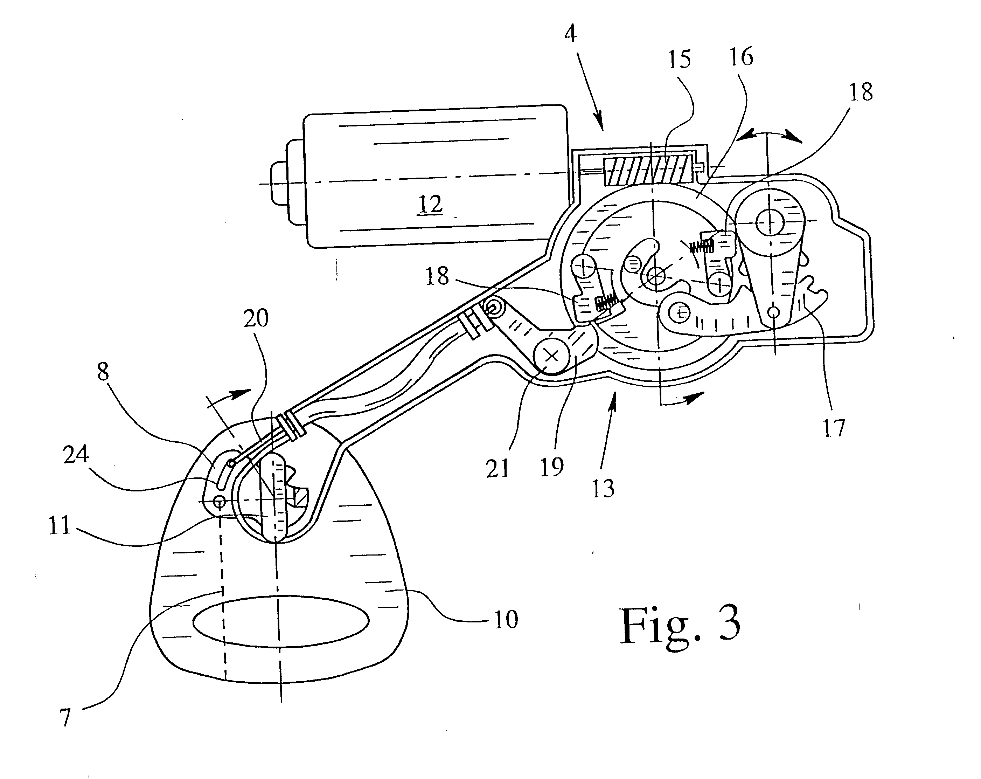

Fig. 3 zeigt das Ausführungsbeispiel nochmals etwas modifiziert in seiner Anordnung, im übrigen aber sehr ähnlich in dem Aufbau. Hier ist die Öffnungsrichtung die Drehrichtung des Schneckenrades 16 entgegen dem Uhrzeigersinn, die Wischerrichtung die Drehrichtung des Schneckenrades 16 im Uhrzeigersinn. Im übrigen sind hier zwei Mitnehmer 18 federbelastet vorgesehen.

Eine in der Zeichnung nicht dargestellte Alternative besteht darin, daß der Antriebsmotor 12 in einer Drehrichtung, jedoch in zwei Drehgeschwindigkeiten ansteuerbar ist und das Getriebe in der einen Drehgeschwindigkeit, und zwar vorzugsweise in der niedrigeren Drehgeschwindigkeit, den Kraftübertragungszug zur Wischervorrichtung 4 schließt, während es in der anderen Drehgeschwindigkeit, vorzugsweise der höheren Drehgeschwindigkeit, den Kraftübertragungszug zur Sperrklinke bzw. zum Zwischenhebel 5 schließt. Eine solche Funktion kann man über eine Fliehkraftkupplung im Getriebe 13 realisieren. Die Funktion ist dann so, daß ein kurzes, schnelles Anlaufen des elektrischen Antriebsmotors 12 die Öffnungshilfe aktiviert, während das normale, langsame Anlaufen des Antriebsmotors 12 die Wischervorrichtung 4 aktiviert.

Zum Stand der Technik ist eingangs erläutert worden, daß dort eine kombinierte Nutzung des elektrischen Antriebsmotors der Heckscheiben-Wischervorrichtung für die Wischervorrichtung selbst und eine Zuziehhilfe eines Kraftfahrzeug-Heckklappenschlosses realisiert ist. Mit der erfindungsgemäßen Lösung läßt sich eine dreifache Funktion des elektrischen Antriebsmotors realisieren. Sieht man nämlich vor, daß der Antriebsmotor 12 in beiden Drehrichtungen und in einer Drehrichtung in zwei Drehgeschwindigkeiten ansteuerbar ist, so lassen sich die originäre Wischerfunktion, die Funktion einer Öffnungshilfe und die Funktion einer Zuziehhilfe miteinander kombinieren. Dazu ist dann vorzusehen, daß der Antriebsmotor in der einen Drehrichtung den Kraftübertragungszug zur Wischervorrichtung und in der anderen Drehrichtung den Kraftübertragungszug zur Zuziehhilfe schließt und daß in der den Kraftübertragungszug zur Wischervorrichtung schließenden Drehrichtung eine zweite, höhere Drehgeschwindigkeit den Kraftübertragungszug zur Öffnungshilfe schließt.

Das dargestellte und bevorzugte Ausführungsbeispiel zeigt schließlich noch, daß in den Kraftübertragungszug zur Sperrklinke bzw. zum Zwischenhebel 5 eine mit dem Schließzylinder 9 gekuppelte Leerhubeinrichtung eingesetzt ist, nämlich hier in Form eines Langloches 24 in der Kulisse 8, die ein vom Schließzylinder 9 ausgehendes mechanisches Ausheben der Sperrklinke unter Ausnutzung des Leerhubes erlaubt, ohne daß eine motorische Funktion eingeleitet wird. Man erkennt dies in Fig. 3 besonders deutlich. Wird dort der Schließzylinder 9 mittels des Türschlüssels 11 nach rechts gedreht, so bewegt sich die Kulisse 8 ebenfalls nach rechts, also im Uhrzeigersinn, hebt die Betätigungsstange 7 an und löst die Sperrklinke aus. Der Bowdenzug 20 zum Betätigungshebel 19 rührt sich dabei nicht.

## Patentansprüche

1. Kraftfahrzeug-Hecktürschloß oder -Heckklappenschloß
mit Schließelementen wie Gabelfalle und Sperrklinke und
mit einem zum Öffnen der Heckklappe (1) die Sperrklinke ggf. über einen Zwischenhebel (5) aushebenden elektrischen Antriebsmotor (12) mit nachgeschaltetem Getriebe (13),
zum Einsatz in einer Heckklappe (1) mit Heckscheiben-Wischervorrichtung (4) mit einem elektrischen Wischermotor,
wobei der Wischermotor als elektrischer Antriebsmotor (12) dient und dazu über das Getriebe (13) mit der Sperrklinke bzw. dem Zwischenhebel (5) betrieblich kuppelbar ist,
**dadurch gekennzeichnet,**
daß die Heckscheiben-Wischervorrichtung (4) mit dem Heckklappenschloß zu einem Modul integriert ist,
daß der Antriebsmotor (12) in beiden Drehrichtungen ansteuerbar ist und das Getriebe (13) in der einen Drehrichtung den Kraftübertragungszug zur Wischervorrichtung (4) und in der anderen Drehrichtung den Kraftübertragungszug zur Sperrklinke bzw. zum Zwischenhebel (5) schließt.

2. Kraftfahrzeug-Hecktürschloß oder -Heckklappenschloß
mit Schließelementen wie Gabelfalle und Sperrklinke und
mit einem zum Öffnen der Heckklappe (1) die Sperrklinke ggf. über einen Zwischenhebel (5) aushebenden elektrischen Antriebsmotor (12) mit nachgeschaltetem Getriebe (13),
zum Einsatz in einer Heckklappe (1) mit Heckscheiben-Wischervorrichtung (4) mit einem elektrischen Wischermotor,
wobei der Wischermotor als elektrischer Antriebsmotor (12) dient und dazu über das Getriebe (13) mit der Sperrklinke bzw. dem Zwischenhebel (5) betrieblich kuppelbar ist,
**dadurch gekennzeichnet,**
daß die Heckscheiben-Wischervorrichtung (4) mit dem Heckklappenschloß zu einem Modul integriert ist,
daß der Antriebsmotor (12) in einer Drehrichtung, jedoch in zwei Drehgeschwindigkeiten ansteuerbar ist und das Getriebe (13) in der einen Drehgeschwindigkeit, vorzugsweise in der niedrigeren Drehgeschwindigkeit, den Kraftübertragungszug zur Wischervorrichtung (4) und in der anderen Drehgeschwindigkeit, vorzugsweise der höheren Drehgeschwindigkeit, den Kraftübertragungszug zur Sperrklinke bzw. zum Zwischenhebel (5) schließt.

3. Kraftfahrzeug-Heckklappenschloß nach Anspruch 2,
**dadurch gekennzeichnet,**
**daß** der Antriebsmotor (12) in beiden Drehrichtungen und in einer der Drehrichtungen in zwei Drehgeschwindigkeiten ansteuerbar ist und das Getriebe in der einen Drehrichtung in der einen, vorzugsweise der niedrigeren Drehgeschwindigkeit den Kraftübertragungszug zur Wischervorrichtung (4) und in der anderen, vorzugsweise der höheren Drehgeschwindigkeit den Kraftübertragungszug zur Sperrklinke bzw. zum Zwischenhebel (5) schließt, und in der anderen Drehrichtung den Kraftübertragungszug zu einer Zuziehhilfe des Kraftfahrzeug-Heckklappenschlosses schließt.

4. Kraftfahrzeug-Heckklappenschloß nach einem der Ansprüche 1 bis 3,
**dadurch gekennzeichnet,**
**daß** die Sperrklinke bzw. der Zwischenhebel (5) über ein Gestänge (7) und/oder einen Bowdenzug (20) mit dem Getriebe (13) verbunden ist.

5. Kraftfahrzeug-Heckklappenschloß nach einem der Ansprüche 1 bis 4,
**dadurch gekennzeichnet,**
**daß** in den Kraftübertragungszug zur Sperrklinke bzw. zum Zwischenhebel (5) eine mit einem Schließzylinder (9) gekuppelte Leerhubeinrichtung eingesetzt ist, die ein vom Schließzylinder (9) ausgehendes mechanisches Ausheben der Sperrklinke unter Ausnutzung des Leerhubes erlaubt.

## Claims

1. Motor-vehicle rear door lock or tailgate lock having closing elements, such as a forked latch and locking pawl, and
having an electric driving motor (12) which lifts the locking pawl clear, optionally via an intermediate lever (5), in order to open the tailgate (1), and has a gear unit (13) connected downstream,
for use in a tailgate (1) having a rear-window wiper device (4) with an electric wiper motor,
the wiper motor being used as the electric driving motor (12) and to this end being operatively connectable via the gear unit (13) to the locking pawl or to the intermediate lever (5),
**characterized**
**in that** the rear-window wiper device (4) is integrated together with the tailgate lock to form a module,
in that the driving motor (12) can be driven in both directions of rotation, and in the one direction of rotation the gear unit (13) closes the power train to the wiper device (4) and in the other direction of rotation closes the power train to the locking pawl or to the intermediate lever (5).

2. Motor-vehicle rear door lock or tailgate lock having closing elements, such as a forked latch and locking pawl, and
having an electric driving motor (12) which lifts the locking pawl clear, optionally via an intermediate lever (5), in order to open the tailgate (1), and has a gear unit (13) connected downstream,
for use in a tailgate (1) having a rear-window wiper device (4) with an electric wiper motor,
the wiper motor being used as the electric driving motor (12) and to this end being operatively connectable via the gear unit (13) to the locking pawl or to the intermediate lever (5),
**characterized**
**in that** the rear-window wiper device (4) is integrated together with the tailgate lock to form a module,
in that the driving motor (12) can be driven in one direction of rotation, but at two rotational speeds, and at the one rotational speed, preferably at the lower rotational speed, the gear unit (13) closes the power train to the wiper device (4), and at the other rotational speed, preferably the higher rotational speed, closes the power train to the locking pawl or to the intermediate lever (5).

3. Motor-vehicle tailgate lock according to Claim 2,
**characterized**
**in that** the driving motor (12) can be driven in both directions of rotation and, in one of the directions of rotation, can be driven at two rotational speeds, and
in the one direction of rotation at the one, preferably the lower rotational speed, the gear unit closes the power train to the wiper device (4) and at the other, preferably the higher rotational speed, closes the power train to the locking pawl or to the intermediate lever (5), and in the other direction of rotation closes the power train to a closing aid for the motor-vehicle tailgate lock.

4. Motor-vehicle tailgate lock according to one of Claims 1 to 3,
**characterized**
**in that** the locking pawl or the intermediate lever (5) is connected to the gear unit (13) via a linkage (7) and/or a Bowden cable (20).

5. Motor-vehicle tailgate lock according to one of Claims 1 to 4,
**characterized**
**in that** a backlash device is inserted into the power train to the locking pawl or to the intermediate lever (5), which backlash device is connected to a lock cylinder (9) and permits the locking pawl to be lifted clear mechanically using the backlash starting from the lock cylinder (9).

## Revendications

1. Serrure de portière arrière d'automobile ou de hayon à essuie-glace, comportant des éléments de fermeture tels qu'un pêne à fourche ou un cliquet d'arrêt, un moteur électrique d'entraînement (12) suivi d'un engrenage (13) pour soulever le cliquet d'arrêt, le cas échéant par un levier intermédiaire (5), afin d'ouvrir le hayon (1), cette serrure devant être installée dans un hayon (1) équipé d'un dispositif d'essuie-glace arrière (4) entraîné par un moteur électrique d'essuie-glace qui sert de moteur d'entraînement (12), et pour cela, peut être accouplé par l'engrenage (13) au cliquet d'arrêt ou au levier intermédiaire (5),
**caractérisée en ce que**
- le dispositif d'essuie-glace arrière (4) est intégré à la serrure du hayon de manière à former un module,
- la rotation du moteur d'entraînement (12) peut être commandée dans les deux sens et dans l'un des sens, l'engrenage (13) ferme la ligne de transmission de force à destination du dispositif d'essuie-glace tandis que dans l'autre sens, l'engrenage ferme la ligne de transmission de force à destination du cliquet d'arrêt ou du levier intermédiaire (5).

2. Serrure de portière arrière d'automobile ou de hayon à essuie-glace, comportant des éléments de fermeture tels qu'un pêne à fourche ou un cliquet d'arrêt, un moteur électrique d'entraînement (12) suivi d'un engrenage (13) pour soulever le cliquet d'arrêt, le cas échéant par un levier intermédiaire (5), afin d'ouvrir le hayon (1), cette serrure devant être installée dans un hayon (1) équipé d'un dispositif d'essuie-glace arrière (4) entraîné par un moteur électrique d'essuie-glace qui sert de moteur d'entraînement (12) et pour cela, peut être accouplé par l'engrenage (13) au cliquet d'arrêt ou au levier intermédiaire (5),
**caractérisée en ce que**
- le dispositif d'essuie-glace arrière (4) est intégré à la serrure du hayon de manière à former un module,
- le moteur d'entraînement (12) tourne dans un seul sens mais sa rotation peut être commandée à deux vitesses différentes dans l'une desquelles de préférence la plus basse, l'engrenage (13) ferme la ligne de transmission de force à destination du dispositif d'essuie-glace, tandis que dans l'autre vitesse, de préférence la plus élevée, l'engrenage ferme la ligne de transmission à destination du cliquet d'arrêt ou du levier intermédiaire (5).

3. Serrure selon la revendication 2,
**caractérisée en ce que**
la rotation du moteur d'entraînement peut être commandée dans les deux sens et, dans un sens, à deux vitesses différentes, l'engrenage (13), dans ce dernier sens, fermant, de préférence, à la vitesse la plus basse, la ligne de transmission de force à destination du dispositif d'essuie-glace (4) tandis que, de préférence à la vitesse la plus élevée, l'engrenage ferme la ligne de transmission de force à destination du cliquet d'arrêt ou du levier intermédiaire (5) et que, dans l'autre sens de rotation, il ferme la ligne de transmission de force à destination d'une assistance à l'ouverture de la serrure du hayon.

4. Serrure selon l'une quelconque des revendications 1 à 3,
**caractérisée en ce que**
le cliquet d'arrêt ou le levier intermédiaire (5) est relié par une tige de manoeuvre (7) et/ou un câble Bowden (20), à l'engrenage (13).

5. Serrure selon l'une quelconque des revendications 1 à 4,
**caractérisée en ce que**
dans la ligne de transmission de force à destination du cliquet d'arrêt ou du levier intermédiaire (5), est monté un dispositif de course à vide qui est accouplé à un cylindre de fermeture (9) et permet, à partir de ce cylindre (9), de soulever mécaniquement le cliquet d'arrêt en utilisant la course à vide.
